# EUROPEAN PATENT APPLICATION

(11) **EP 3 333 030 A1**
(43) Date of publication of application: **13.06.2018**
(21) Application number: 17201761.8
(22) Date of filing: 15.11.2017
(51) Int. Cl.: B60T 8/96

(54) **VEHICLE CONTROL UNIT AND METHOD THEREOF**

(30) Priority: 07.12.2016 SE 1651611
(71) Applicant: Scania CV AB, 151 87 Södertälje (SE)
(72) Inventor: NILSSON, Mattias, 151 33 Södertälje (SE); NYSTRÖM, Tom, 151 39 Södertälje (SE)
(74) Representative: Scania CV AB

(57) **Abstract**

The disclosure relates to a method performed by a vehicle control unit configured for controlling a vehicle, the method comprising determining a failure condition of one or more primary braking control units, and if a failure condition is determined obtaining control information indicative of at least a planned route, wherein the planned route indicate a target driving path of the vehicle from a current location to a safe stopping location, obtaining first sensor data indicative of the environment surrounding the vehicle, and controlling one or more secondary braking control units based at least on the control information and the first sensor data. Furthermore, the present invention also relates to a vehicle control unit, a computer program, a computer program product and a vehicle comprising the vehicle control unit.

## Description

### Technical Field

The present invention relates to vehicle control unit configured for controlling a vehicle. The invention further relates to a corresponding method, computer program, computer program product, carrier and a vehicle comprising the vehicle control unit.

### Background

It is essential that vehicles, in particular autonomous vehicles, have redundant systems for operation critical systems, such as steering and braking systems, in case of failure. In particular in vehicles including drive-by-wire systems, a failure may occur e.g. in the bus transferring control signals from the vehicle control unit to a control unit, in the control unit as such, in the actuator controlled by the control unit or in a mechanism controlled by the actuator. Examples of control units may e.g. be a braking control unit, a steering control unit or a powertrain control unit.

In some conventional systems, such as described in US 2016/0144840 A1, device for generating an emergency braking signal may cause switching from a primary braking system to a secondary braking system when it is detected or determined that primary braking system fails.

A problem with conventional systems is that emergency activation of the secondary braking system may cause the vehicle to stop in a position that risk causing damage to the vehicle, damage to the driver of the vehicle or cause traffic congestion. A further problem is that emergency activation of the secondary braking system may be hazardous to passengers of the vehicle, e.g. passengers in a bus.

Thus, there is a need for an improved vehicle control unit and vehicle.

### Objects of the invention

An objective of embodiments of the present invention is to provide a solution which mitigates or solves the drawbacks and problems of conventional solutions.

### Summary of the invention

The above and further objectives are achieved by the subject matter of the independent claims. Further advantageous implementation forms of the invention are defined by the dependent claims.

An "or" in this description and the corresponding claims is to be understood as a mathematical OR which covers "and" and "or", and is not to be understand as an XOR (exclusive OR). The indefinite article "a" in this disclosure and claims is not limited to "one" and can also be understood as "one or more", i.e., plural.

According to a first aspect of the invention, this objective is achieved by a method performed by a vehicle control unit according to the present disclosure. The vehicle control unit may be configured for controlling a vehicle. The method comprises detecting or determining a failure and/or a failure condition of one or more primary braking control units of the vehicle. The method further comprises, if a failure condition is detected or determined, obtaining control information indicative of at least a planned route. The planned route may indicate a target driving path of the vehicle from a current location to a safe stopping location. The method further comprises obtaining first sensor data indicative of the environment surrounding the vehicle. The method further comprises controlling one or more secondary braking control units based at least on the control information and the first sensor data.

One advantage of the first aspect of the invention is that no extra components are needed in a drive-by-wire and/or autonomous vehicle to get a redundant method of stopping the vehicle. A further advantage is that the stop is done in a safe and controlled way, such that accidents, blocking of traffic, damages to passengers or traffic congestion can be avoided. The vehicle is controlled to stop in a safe manner and/or in a safe stopping location that maximizes safety with regards to the environment of the vehicle.

In one embodiment of the first aspect, the one or more secondary braking control units are controlled in a plurality of steps indicating a fraction of a maximum braking force of the one or more secondary braking control units.

One advantage of this embodiment is that a safe stop is achieved in multiple types of vehicles. E.g. in a bus it is not desirable to brake too hard because of standing passengers. In a second embodiment according to the first aspect, second sensor data indicative of relative wheel speeds of the vehicle is obtained and the one or more secondary braking control units is further controlled based on the second sensor data.

One advantage of this embodiment is that the stability of the vehicle is also maintained by monitoring the wheel speed, e.g. by avoiding individual or relative slippage of wheels over the road surface.

According to a second aspect of the invention, this objective is achieved by a vehicle control unit configured for controlling a vehicle. The vehicle control unit comprises circuitry in the form of a processor and a memory. The memory contains instructions executable by the processor, whereby the vehicle control unit is operative and/ or configured to perform the method according to the first aspect.

According to a third aspect of the invention, this objective is achieved by a vehicle. The vehicle comprises a vehicle control unit according to the second aspect. The vehicle further comprises one or more primary braking control units configured to actuate one or more primary braking means of the vehicle. The vehicle further comprises one or more secondary braking control units configured to actuate one or more secondary braking means of the vehicle. The vehicle further comprises one or more environment sensors. The one or more environment sensors may be configured to detect and/or register and/or capture first sensor data indicative of the environment of the vehicle. The one or more environmental sensors may further be configured to send the first sensor data as a signal to the vehicle control unit according to the second aspect.

Further applications and advantages of embodiments of the invention will be apparent from the following detailed description.

### Brief description of the drawings

Fig. 1A and 1B illustrates scenarios with a vehicle where failure condition of one or more primary braking control units has been detected or determined, according to one or more embodiments of the present invention.
Fig. 2 shows a vehicle comprising a vehicle control unit according to an embodiment of the present invention.
Fig. 3 shows a vehicle communicating with a control information server according to an embodiment of the present invention.
Fig. 4 shows a vehicle control unit according to an embodiment of the present invention.
Fig. 5 shows a block diagram of a method according to one or more embodiments of the present invention.

### Detailed description

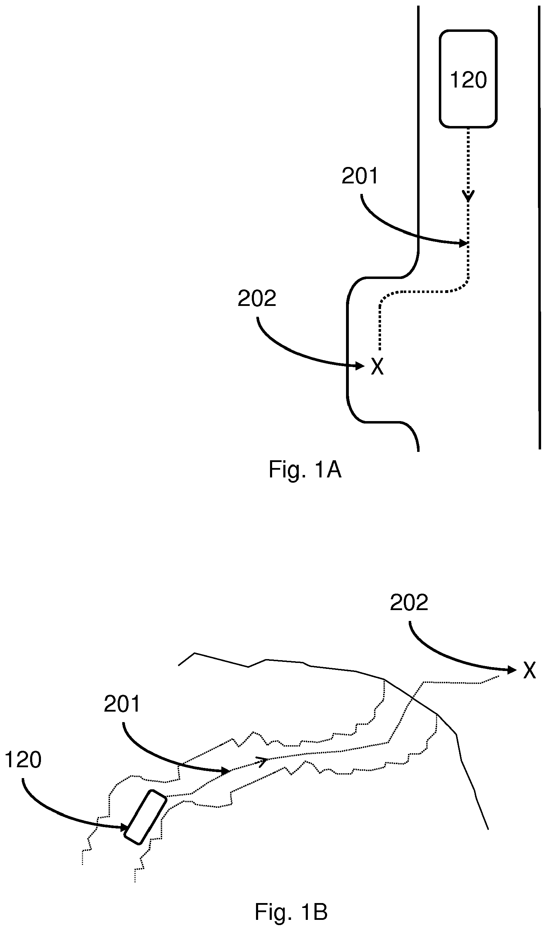

Fig. 1A illustrates a first scenario with a vehicle 120 where a failure condition of one or more primary braking control units have been detected or determined, according to an embodiment of the present invention. In the first scenario, the vehicle 120 may be driving along a one-lane highway. A failure and/or a failure condition of one or more primary braking control units is detected or determined when the vehicle 120 is in a current geographical position. Control information is then obtained indicative of at least a planned route, wherein the planned route at least indicate a target driving path 201 of the vehicle 120 from the current location to a safe stopping location 202, e.g. a rest area, lay-by, halting place or service area as shown in Fig. 1A. I one example, the target driving path may be represented as map data, e.g. map vector data, optionally associated with an estimated and/or expected and/or recommended speed, e.g. for each map vector segment, thereby forming a speed profile indicating a target speed along the planned route. In a further example, the control information comprises the target driving path represented as a sequential list of target coordinates with an associated speed and/or a list of driving directions to reach the safe stopping location. The driving directions may be indicated by strings such as "continue on road 23A, take the exit at junction C45. Further, the first sensor data may be indicative of the environment surrounding the vehicle, e.g. received from a sensor, such as radar, lidar, video camera, infrared camera, gps, or any other suitable environment sensor. One or more secondary braking control units may then be controlled based at least on the control information and the first sensor data. The one or more secondary braking control units may be controlled such that the vehicle travels at a particular speed and/or speed, e.g. along the target driving path 201, to the safe stopping location 202. Optionally the vehicle may travel according to a speed profile indicating a target speed along the planned route. A steering control unit SC may optionally further be controlled based at least on the control information and the first sensor data, e.g. by controlling the angle of a pair of wheels e.g. front wheels of the vehicle, such that the vehicle 120 arrives at the safe stopping location 202. A powertrain control unit, PC, may optionally further be controlled based at least on the control information and the first sensor data to control the driving power delivered to one or more of the wheels of the vehicle. The one or more secondary braking control units may optionally further be controlled in a plurality of steps indicating a fraction of a maximum braking force of the one or more secondary braking control units, e.g. a percentage such as 50% or a fraction value such as 0.5. The vehicle 120 may comprise e.g. a mining vehicle, a truck, a bus or a car, or any similar vehicle or other means of conveyance. The vehicle 120 may be driver controlled and/or driverless autonomously controlled vehicles in different embodiments.

Fig. 1B illustrates a scenario with a vehicle 120 where failure condition of one or more primary braking control units have been detected or determined, according to an embodiment of the present invention. The vehicle 120 may be driving in tunnels, e.g. inside a mine. In a similar manner as described in relation to Fig. 1A, a failure condition of one or more primary braking control units is detected or determined when the vehicle 120 is in a current geographical position. The planned route may in this scenario indicate the target driving path 201 of the vehicle 120 from the current location to a safe stopping location 202, e.g. an open area after exiting the tunnel as shown in Fig. 1B.

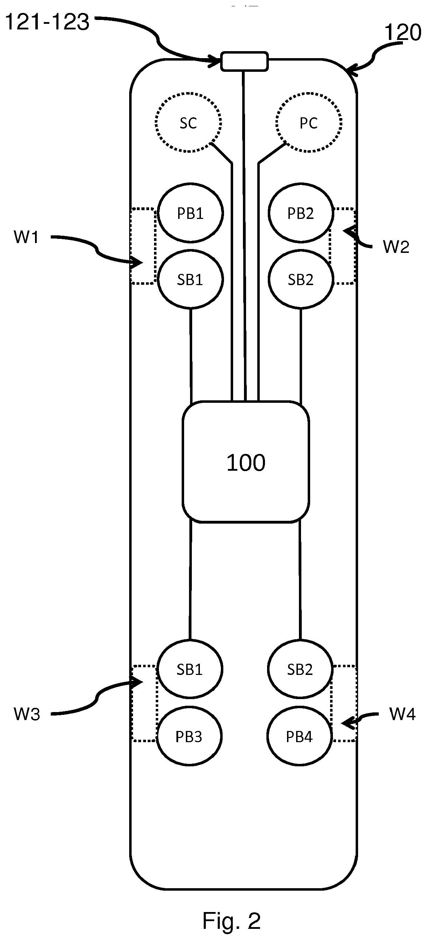

Fig. 2 shows a vehicle 120 comprising a vehicle control unit 100 according to an embodiment of the present invention. The vehicle may comprise a vehicle control unit 100 according to embodiments described herein.

The vehicle may further comprise one or more primary braking control units PB1-PB4 configured to actuate one or more primary braking means of the vehicle 120. The primary braking means may be configured to apply a braking force to any or all of the wheels W1-W4 of the vehicle. The one or more primary braking control units PB1-PB4 may comprise control logic and/or a processor, an optional memory and an actuator configured to actuate the primary braking means. The one or more primary braking control units PB1-PB4 may be configured to receive control signals from the vehicle control unit 100 and control an actuator controlled by the control unit acting on the primary braking means based on the control signal. The one or more primary braking control units PB1-PB4 may further be configured to send status signals from the control unit to the vehicle control unit 100 indicative of status of the one or more primary braking control units PB1-PB4, the actuator or the primary braking means, e.g. indicating a failure of the one or more primary braking control units PB1-PB4. The primary braking means may be any means or arrangements suitable to apply a braking force to any or all of the wheels W1-W4 of the vehicle, e.g. hydraulic, electric or pneumatic brakes, disc brakes or drum brakes.

The vehicle may further comprise one or more secondary braking control units SB1-SB4 configured to actuate one or more secondary braking means of the vehicle 120. A secondary braking control unit may comprise control logic and/or a processor, an optional memory and an actuator. The one or more secondary braking control units SB1-SB4 may be configured to receive control signals from the vehicle control unit 100 and control the actuator actuating the secondary braking means based on the control signal. The secondary braking means may be any means or arrangement suitable to apply a braking force to any or all of the wheels W1-W4 of the vehicle, e.g. an electronic handbrake, a hydraulic retarder, an electric machine , an exhaust brake, disc brakes or drum brakes.

The vehicle may further comprise one or more environment sensors 121-123. The one or more environment sensors may be configured to detect and/or register and/or capture first sensor data indicative of the environment of the vehicle. The one or more environment sensors 121-123 may further be configured to send the first sensor data as a signal to the vehicle control unit. Examples of environment sensors 121-123 may be any selection of radar sensor, lidar sensor, video camera, infrared camera, GPS with map, traffic information receiver or any other suitable environment sensor. In an example, the environment sensors 121-123 may include a radar detecting obstacles in front of the vehicle, such as pedestrians and/or other slow moving or stationary vehicles. In a further example, the environment sensors 121-123 may include a camera detecting road markings in front of the vehicle, such as white lines outlining the road surface. The environment sensors 121-123 may comprise a processor communicatively coupled to a transceiver for wired or wireless communication. Further, the one or more environment sensors 121-123 may further comprise at least one optional antenna (not shown in the figure). The antenna may be coupled to the transceiver and is configured to transmit and/or emit and/or receive wired signals in a wired communications system and/or wireless signals in a wireless communication system. The processor may be communicatively coupled to a selection of the transceiver and the memory. In one example, the processor may be any of processing circuitry and/or a central processing unit and/or processor modules and/or multiple processors configured to cooperate with each-other. Further, the one or more environment sensors 121-123 may further comprise a memory. The memory may contain instructions executable by the processor to perform the methods described herein, e.g. to capture first sensor data indicative of the environment and send first sensor data to the vehicle control unit 100.

The vehicle control unit 100 may be communicatively coupled to the one or more primary braking control units PB1-PB4, the one or more secondary braking control units SB1-SB4 and the one or more environment sensors 121-123, e.g. via wired or wireless communication, such as a Controller Area Network, CAN, bus, Bluetooth, WiFi etc. The one or more environment sensors 121-123 may be configured to send the first sensor data directly to the vehicle control unit 100 or via a wired and/or wireless communications network 130. The wired or wireless communication may be performed using any of a CAN bus, Bluetooth, WiFi, GSM, UMTS, LTE or LTE advanced communications network or any other wired or wireless communication network known in the art.

The vehicle may further optionally comprise a steering control unit SC configured to actuate steering means of the vehicle 120, e.g. to control an angle of a pair of wheels W1-W4 e.g. the front wheels. In one example, the steering means are controlled such that the vehicle 120 follows the target driving path 201. The steering control unit SC may comprise control logic and/or a processor, an optional memory and an actuator configured to actuate the steering means. The steering control unit SC may be configured to receive control signals from the vehicle control unit 100 and control an actuator controlled by the steering control unit and actuating the steering means based on the control signal. The steering control unit SC may further be configured to send status signals from the control unit to the vehicle control unit 100 indicative of status of the steering control unit SC, the actuator or the steering means, e.g. indicating a failure of the steering control unit SC. The steering means may be any means or arrangement suitable to steering the vehicle, e.g. hydraulic, electric or pneumatic means acting on the wheels W1-W4 of the vehicle.

The vehicle may further optionally comprise a powertrain control unit PC configured to control the power train means delivering driving power to one or more of the wheels W1-W4 of the vehicle. In one example, the power train means are controlled in a manner such that the vehicle 120 follows the target driving path 201 and/or the target speed along the planned route. The powertrain control unit PC may comprise control logic and/or a processor, an optional memory and an actuator configured to actuate the steering means. The powertrain control unit PC may be configured to receive control signals from the vehicle control unit 100 and control an actuator controlled by the control unit acting on the powertrain means based on the control signal. The powertrain control unit PC may further be configured to send status signals from the control unit to the vehicle control unit 100 indicative of status of the powertrain control unit PC, the actuator or the powertrain means, e.g. indicating a failure of the powertrain control unit PC. The powertrain means may be any means or arrangement suitable to delivering driving power to one or more of the wheels W1-W4 of the vehicle, e.g. the engine and/or driving means, the transmission, the drive shafts, the differentials, and the final drive, e.g. acting on the wheels W1-W4 of the vehicle. The vehicle control unit 100 may further be communicatively coupled to the steering control unit SC and/or the powertrain control unit PC. The vehicle may further comprise on or more additional sensors configured to receive and/or obtain and/or measure physical properties pertaining to the vehicle 120 and send one or more sensor signals comprising second sensor data indicative of the physical properties to the processing means 112, e.g. second sensor data indicative of wheel speeds of the vehicle.

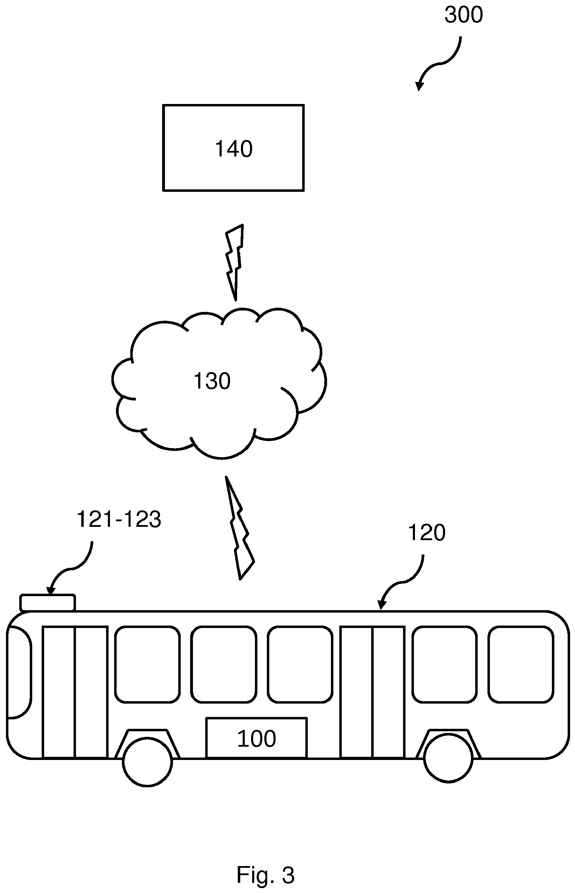

Fig. 3 shows a vehicle 120 communicating with a control information server 140 according to an embodiment of the present invention. The vehicle control unit 100 may be configured to obtain control information by retrieving the control information from a memory and/or by calculating the control information based on a received and/or retrieved current position and received and/or retrieved map data and/or predetermined conditions, e.g. received and/or retrieved from an global positioning system GPS unit and/or a storage device/memory, or by receiving the control information from the control information server 140, e.g. a server and/or a general purpose computer. An example of a predetermined condition may be to not stop in a single file location, such as on a single file highway or in a single file tunnel. The control information may be received directly from the control information server 140 or via a wired and/or wireless communications network 130. The a wireless communications network 130 may comprise e.g. any of a Bluetooth, GSM, UMTS, LTE or LTE advanced communications network or any other wired or wireless communication network known in the art.

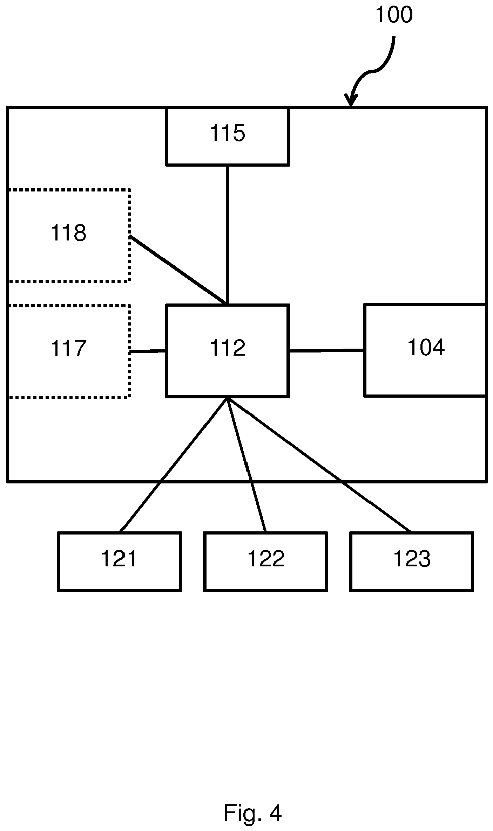

Fig. 4 shows a vehicle control unit 100 according to an embodiment of the present invention. The vehicle control unit 100 may be in the form of an Electronic Control Unit, a server, an on-board computer, an digital information display, a stationary computing device, a laptop computer, a tablet computer, a handheld computer, a wrist-worn computer, a smart watch, a PDA, a Smartphone, a smart TV, a telephone, a media player, a game console, a vehicle mounted computer system or a navigation device. The vehicle control unit 100 may comprise a processor 112 communicatively coupled to a transceiver 104 for wired or wireless communication. Further, the vehicle control unit 100 may further comprise at least one optional antenna (not shown in figure). The antenna may be coupled to the transceiver 104 and is configured to transmit and/or emit and/or receive a wireless signals in a wireless communication system, e.g. send/receive control signals and/or status data to/from the one or more primary braking control units PB1-PB4, the one or more secondary braking control units SB1-SB4, the one or more environment sensors 121-123 or any other control unit or sensor. In one example, the processor 112 may be any of a selection of processing circuitry and/or a central processing unit and/or processor modules and/or multiple processors configured to cooperate with each-other. Further, the vehicle control unit 100 may further comprise a memory 115. The memory 115 may contain instructions executable by the processor to perform the methods described herein. The processor 112 may be communicatively coupled to a selection of any of the transceiver 104, the one or more environment sensors 121-123 and the memory 115. The vehicle control unit 100 may be configured to receive the plurality of voltage values directly from the voltage sensor 120 or via the wired and/or wireless communications network 140.

The vehicle control unit 100 may further comprise a communications interface, e.g. the wireless transceiver 104 and/or a wired/wireless communications network adapter, which is configured to send and/or receive data values or parameters as a signal to or from the processing means 112 to or from other external nodes, e.g. the control information server 140. In an embodiment, the communications interface communicates directly between communication network nodes or via the communications network 130. In one or more embodiments the vehicle control unit 100 may further comprise an input device 117, configured to receive input or indications from a user and send a user-input signal indicative of the user input or indications to the processing means 112. In one or more embodiments the vehicle control unit 100 may further comprise a display 118 configured to receive a display signal indicative of rendered objects, such as text or graphical user input objects, from the processing means 112 and to display the received signal as objects, such as text or graphical user input objects. In one embodiment the display 118 is integrated with the user input device 117 and is configured to receive a display signal indicative of rendered objects, such as text or graphical user input objects, from the processing means 112 and to display the received signal as objects, such as text or graphical user input objects, and/or configured to receive input or indications from a user and send a user-input signal indicative of the user input or indications to the processing means 112. In embodiments, the processing means 112 is communicatively coupled to the memory 115 and/or the communications interface and/or the input device 117 and/or the display 118 and/or the one or more environment sensors 121-123. In embodiments, the communications interface and/or transceiver communicates using wired and/or wireless communication techniques. In embodiments, the one or more memory 115 may comprise a selection of a hard RAM, disk drive, a floppy disk drive, a magnetic tape drive, an optical disk drive, a CD or DVD drive (R or RW), or other removable or fixed media drive. In a further embodiment, the vehicle control unit 100 may further comprise and/or be coupled to one or more additional sensors configured to receive and/or obtain and/or measure physical properties pertaining to the vehicle 120 and send one or more sensor signals indicative of the physical properties to the processing means 112, e.g. second sensor data indicative of relative wheel speeds of the vehicle.

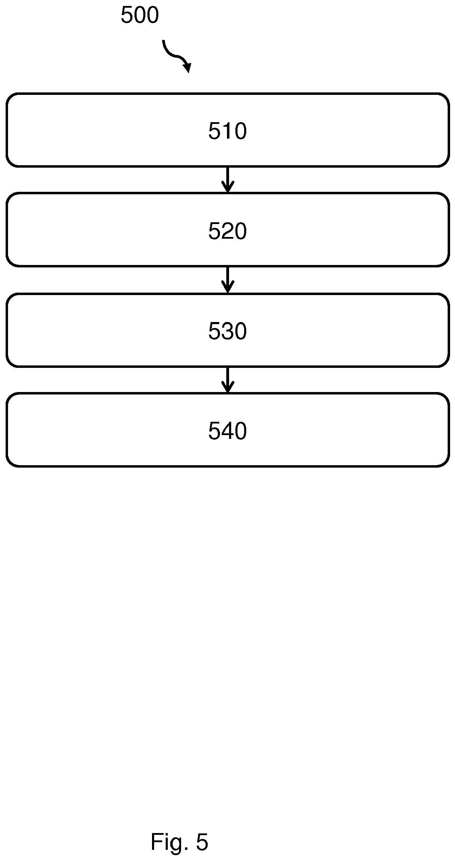

Fig. 5 shows a block diagram of a method according to one or more embodiments of the present invention. The method 500 may performed by the vehicle control unit 100 configured for controlling a vehicle 120. The method comprises:
STEP 510: detecting or determining 510 a failure condition of one or more primary braking control units PB1-PB4. In one example, the failure condition is detected or determined by receiving status signals over a CAN bus from any of the primary braking control units PB1-PB4 indicating a failure or by detecting or determining an absence of a periodic status signal.

If a failure condition is detected or determined the method further performs the steps of:
STEP 520: obtaining control information indicative of at least a planned route. The control information indicative of the planned route may further indicate a target driving path 201 of the vehicle 120 from a current location to a safe stopping location 202, as further described in relation to Fig. 1A and Fig. 3. I one example, the target driving path may be represented as map data, e.g. map vector data, optionally associated with an estimated and/or expected and/or recommended speed, e.g. for each map vector segment, thereby forming a speed profile indicating a target speed along the planned route. In a further example, the control information comprises the target driving path represented as a sequential list of target coordinates with an associated speed and/or a list of driving directions to reach the safe stopping location. The driving directions may be indicated by strings such as "continue on road 23A, take the exit at junction C45. In a further example, the control information indicative of the planned route may further comprise information related to the route, such as sharp turns ahead, pedestrian crossings ahead, traffic lights ahead, traffic congestion ahead or any other map and/or traffic related information associated with the target driving path 201. As further described in relation to Fig. 3A, the control information may be obtained
STEP 530: obtaining first sensor data indicative of the environment surrounding the vehicle. Examples of first sensor data may be data generated by any of a selection of a radar sensor, a lidar sensor, a video camera, an infrared camera, a GPS with map, a traffic information receiver or any other first sensor data indicative of the environment surrounding the vehicle. In an example, the first sensor data is indicative obstacles in front of the vehicle, such as pedestrians and/or other slow moving or stationary vehicles. In a further example, the first sensor data may be indicative of road markings in front of the vehicle, such as white lines outlining the road surface.
STEP 540: controlling one or more secondary braking control units SB1-SB4 based at least on the control information and the first sensor data.

In one example, the one or more secondary braking control units SB1-SB4 may be controlled such that the speed of the vehicle is adapted based on control information indicative of sharp turns ahead, pedestrian crossings ahead, traffic lights ahead, traffic congestion ahead or traffic related information associated with the target driving path. The one or more secondary braking control units SB1-SB4 may further be controlled such that the speed is adapted based on first sensor data is indicative obstacles in front of the vehicle and/or road markings in front of the vehicle.

In one embodiment, the control information is further indicative of a speed profile indicating a target speed along the planned route. In one example, an initial speed profile follows the maximum speed limits associated with the target driving path 201, e.g. speed limits along a road. After detecting or determining a failure condition, the initial speed profile may be adapted to an adapted speed profile to account for any reduced braking capacity of the secondary braking means, obstacles ahead, sharp turns etc. The speed profile may be adapted by increasing and/or reducing the speed indicated by the initial speed profile based on the previously mentioned factors. In a further example, the control information is further indicative of deceleration values recommended to adapt the speed of the vehicle initially following the initial speed profile to a speed of the vehicle conforming with the adapted speed profile, e.g. following a slow and safe deceleration.

In one embodiment, the method further comprises controlling a steering control unit SC based at least on the control information and the first sensor data. In one example, the vehicle is an autonomous driving vehicle and the steering control unit SC is controlled to follow the target driving path 201, e.g. keeping in the slow lane or keeping to the edge of the road to minimize disturbance to other vehicles.

In one embodiment, the method further comprises controlling a powertrain control unit PC based at least on the control information and the first sensor data. In an example, the powertrain control unit PC is controlled to follow the target driving path 201 and/or the speed profile by actuating a throttle of the engine or auxiliary brakes such as a hydraulic retarder, an electric machine or an exhaust brake.

In one embodiment, the one or more secondary braking control units SB1-SB4 are controlled in a plurality of steps indicating a fraction of a maximum braking force of the secondary breaking means controlled by the one or more secondary braking control units SB1-SB4. In an example, the one or more secondary braking control units SB1-SB4 actuate the secondary braking means periodically in actuation pulses, where the duration and/or width of each pulse are adapted according to a desired fraction of the maximum braking force of the one or more secondary braking control units SB1-SB4. E.g. a fraction of 50% or 0.5 could mean activating the secondary braking means for a predetermined time period and subsequently deactivating the secondary braking means for the same predetermined time period. In one example, the second sensor data is obtained from an inertial measurement unit (IMU), an observed position based on radar or lidar measurements.

In one embodiment, the method further comprises obtaining second sensor data, e.g. from the additional sensors, indicative of relative wheel speeds of the vehicle and controlling the one or more secondary braking control units SB1-SB4 further based on the second sensor data. In one example, the one or more secondary braking control units SB1-SB4 are controlled based on a deceleration value of the vehicle. The deceleration value may be obtained from an inertial measurement unit (IMU) or an observed position based on GPS, radar or lidar measurements.

In one embodiment, a computer program is provided comprising computer-executable instructions for causing the vehicle control unit 100 when the computer-executable instructions are executed on a processing unit comprised in the vehicle control unit 100, to perform any of the methods described herein. Furthermore, any methods according to embodiments of the invention may be implemented in a computer program, having code means, which when run by processing means causes the processing means to execute the steps of the method. The computer program is included in a computer readable medium of a computer program product.

In one embodiment, a computer program product is provided comprising a computer-readable storage medium, the computer-readable storage medium having the computer program above embodied therein.

In one embodiment, a carrier containing the computer program above, wherein the carrier is one of an electronic signal, optical signal, radio signal, or computer readable storage medium.

In an embodiment, a computer program product comprising a memory and/or a computer-readable storage medium, the computer-readable storage medium having the computer program described above embodied therein. The memory and/or computer-readable storage medium referred to herein may comprise of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

In embodiments, the communications network 130 communicate using wired or wireless communication techniques that may include at least one of a Local Area Network (LAN), Metropolitan Area Network (MAN), Global System for Mobile Network (GSM), Enhanced Data GSM Environment (EDGE), Universal Mobile Telecommunications System, Long term evolution, High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (WiMAX) and ultrasonic communication, etc., but is not limited thereto.

Moreover, it is realized by the skilled person that the vehicle control unit 100 may comprise the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processor and/or processing means of the present disclosure may comprise one or more instances of processing circuitry, processor modules and multiple processors configured to cooperate with each-other, Central Processing Unit (CPU), a processing unit, a processing circuit, a processor, an Application Specific Integrated Circuit (ASIC), a microprocessor, a Field-Programmable Gate Array (FPGA) or other processing logic that may interpret and execute instructions. The expression "processor" and/or "processing means" may thus represent a processing circuitry comprising a plurality of processing circuits, such as, e.g., any, some or all of the ones mentioned above. The processing means may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A method (500) performed by a vehicle control unit (100) configured for controlling
a vehicle (120), the method comprising:
determining (510) a failure condition of one or more primary braking control units (PB1-PB4), and if a failure condition is determined:
obtaining (520) control information indicative of at least a planned route, wherein the planned route indicate a target driving path (201) of the vehicle (120) from a current location to a safe stopping location (202),
obtaining (530) first sensor data indicative of the environment surrounding the vehicle, and
controlling (540) one or more secondary braking control units (SB1-SB4) based at least on the control information and the first sensor data.

2. The method (500) according to claim 1, wherein the control information is further indicative of a speed profile indicating a target speed along the planned route.

3. The method (500) according to any of the preceding claims, further comprising:
controlling a steering control unit (SC) based at least on the control information and the first sensor data.

4. The method (500) according to any of the preceding claims, further comprising:
controlling a powertrain control unit (PC) based at least on the control information and the first sensor data.

5. The method (500) according to any of the preceding claims, wherein the one or more secondary braking control units (SB1-SB4) are controlled in a plurality of steps indicating a fraction of a maximum braking force of the one or more secondary braking control units (SB1-SB4).

6. The method (500) according to any of the preceding claims, further comprising:
obtaining second sensor data indicative of relative wheel speeds of the vehicle, and,
controlling the one or more secondary braking control units (SB1-SB4) further based on the second sensor data.

7. A vehicle control unit (100) configured for controlling a vehicle (120) comprising circuitry comprising:
a processor (112), and
a memory (116), said memory containing instructions executable by said processor, wherein said vehicle control unit (100) is operative and/ or configured to perform the method according to any of claims 1-6.

8. A computer program comprising computer-executable instructions for causing a control unit (100) when the computer-executable instructions are executed on a processing unit comprised in the wireless device, to perform the method according to any of claims 1-6.

9. A computer program product comprising a computer-readable storage medium, the computer-readable storage medium having the computer program according to claim 8 embodied therein.

10. A carrier containing the computer program of claim 8, wherein the carrier is one of an electronic signal, optical signal, radio signal, or computer readable storage medium.

11. A vehicle (120) comprising:
a vehicle control unit (100) according to claim 7,
one or more primary braking control units (PB1-PB4) configured to actuate one or more primary braking means of the vehicle (120),
one or more secondary braking control units (SB1-SB4) configured to actuate the one or more secondary braking means of the vehicle (120), and
one or more environment sensors (121-123).

12. The vehicle according to claim 11, wherein the vehicle is an autonomously driving vehicle.
